# DEMANDE DE BREVET EUROPEEN

(11) **EP 2 402 403 A1**
(43) Date de publication de la demande: **04.01.2012**
(21) Numéro de dépôt: 10305725.3
(22) Date de dépôt: 02.07.2010
(51) Int. Cl.: C09D 5/16, A01N 63/02, C09D 199/00

(54) **Exopolysaccharides pour la prévention et la lutte contre la formation de biofilms**

(71) Demandeur: Institut Français de Recherche pour l'Exploitation de la Mer (IFREMER), 92138 Issy-les-Moulineaux (FR)
(72) Inventeur: Guézennec, Jean, 29280, Plouzane (FR)
(74) Mandataire: de Mareüil-Villette, Caroline

(57) **Abrégé**

L'invention concerne des exopolysaccharides de préférence obtenus par fermentation de bactéries issues d'écosystèmes hydrothermaux profonds en tant qu'agents de prévention de la formation, sur une surface, de biofilms indésirables. L'invention concerne également un procédé de protection d'une surface par prévention de la formation du film primaire conduisant à des biofilms indésirables, dans lequel on met en contact ou l'on greffe ladite surface avec au moins un exopolysaccharide selon l'invention. L'invention concerne en outre un procédé de modification des caractéristiques physique d'une surface de telle manière que l'adhésion d'un biofilm bactérien indésirable sur ladite surface se trouve limitée.

## Description

### [Domaine de l'invention]

La présente invention concerne le domaine de la prévention de biofilms de microorganismes indésirables. Plus particulièrement, l'invention propose un procédé de traitement de surface en vue de protéger ladite surface contre l'adhésion intempestive de biofilms indésirables, le procédé selon l'invention mettant en oeuvre des exopolysaccharides. Selon l'invention, la surface à traiter est mise en contact, ponctuellement ou à intervalles régulier, avec des exopolysaccharides, de préférence en solution, qui sont capables de former sur cette surface un film protecteur d'exopolysaccharides.

Un biofilm est une communauté de microorganismes, notamment du type bactérie, champignon, algue ou protozoaire, adhérant entre eux et à une surface. La production de biofilm est caractérisée par la sécrétion d'une matrice qui est susceptible d'adhérer à de nombreux types de surface, notamment minéraux, métaux, verres, résines synthétiques. Les biofilms sont généralement observés dans des milieux aqueux ou humides.

Le phénomène d'adhésion d'un biofilm indésirable se déroule en plusieurs séquences :
1. Formation d'un film primaire qui va conditionner la surface ;
2. Adhésion réversible des micro-organismes par des liaisons chimiques non-covalentes ou faibles ;
3. Adhésion permanente facilitée par la production d'exopolymères saccharidiques ou de protéines ou glycoprotéines qui constituent des points d'ancrage pour une colonisation ultérieure de plus grande ampleur ;
4. En milieu marin, la colonisation permet, à terme, l'attachement d'organismes supérieurs (balanes, moules, et plus généralement macro-organismes et macro-salissures).

### [Problème technique]

La formation de biofilms peut avoir de nombreuses conséquences tant dans le domaine industriel, que dans le domaine environnemental ou celui de la santé, notamment de la santé publique. La présente invention peut donc trouver une application dans des domaines variés.

Dans le domaine industriel, les biofilms induisent des corrosions, diminuent l'échange thermique dans les échangeurs et provoquent des résistances à l'écoulement dans les tubes et tuyaux. Dans le domaine de la santé, il est reconnu que la formation de biofilms pourrait être à l'origine de nombreux cas de maladies nosocomiales, notamment lorsque du biofilm se fixe sur du matériel chirurgical de type cathéter ou dans les systèmes de climatisation ou de réfrigération.

L'invention s'intéresse particulièrement à la formation de biofilms sur toute surface susceptible d'être colonisée en milieu naturel, notamment en milieu marin. Dans le milieu marin, il est connu que presque toutes les surfaces immergées en milieu marin sont sujettes au développement d'un biofilm. La présence de ce biofilm est à l'origine de nombreux problèmes dans le domaine océanographique et pour les activités marines. Les moyens de lutte employés contre les salissures installées sont souvent toxiques (notamment biocides) et peuvent avoir des conséquences désastreuses vis-à-vis de la faune et de la flore de l'environnement marin. D'autre part, les nettoyages réguliers de surfaces augmentent considérablement les coûts d'exploitation des industries marines.
Il existe donc un réel besoin de développer des approches alternatives aux traitements traditionnels contre les salissures et les biofilms indésirables.

La présente invention présente un intérêt particulier en ce qu'elle agit au niveau des premières étapes du phénomène d'adhésion, à savoir la prévention de la formation de film primaire et la prévention de l'adhésion réversible, prévenant de fait les étapes ultérieures d'adhésion permanente de biofilm indésirable, puis d'accrochage de macro-organismes sur ce biofilm.

### [Etat de la technique]

Il existe des agents anti-salissures dans l'état de la technique. Par exemple, US 7,090,856 décrit un agent anti-salissures qui est non toxique, et bénin pour l'environnement marin. Cet agent est issu de *Vibrio alginolyticus* ou *Vibrio proteolyticus.* Il peut être constitué par le surnageant d'une fermentation de ces bactéries, qui est ensuite dessalé et généralement concentré. Il peut être utilisé seul ou dans des compositions de peinture, de béton ou de revêtement. Il peut être utilisé sur des surfaces marines sous forme de revêtement permanent ou d'un spray ou liquide de rinçage. Il inhibe l'adhésion de larves de macro-organismes du type notamment balane ou polychètes. Toutefois, US 7,090,856 ne décrit ni ne suggère la prévention d'agent de prévention du film primaire qui est à l'origine de l'adhésion réversible dans un premier temps, puis permanente, des microorganismes. Au contraire, US 7,090,856 décrit la prévention de la fixation de macro-organismes, et agirait sur l'adhésion des larves de macro-organismes au biofilm indésirable déjà constitué.

Par ailleurs, WO 9607752 décrit des exopolysaccharides de la famille des *Hyphomonas* comme agent de liaison avec un métal, pour purifier des eaux desdits métaux.

A la connaissance de la Demanderesse, aucun document de l'art antérieur ne décrit ni ne suggère d'agent, qui soit à la fois respectueux de l'environnement, et qui aie le pouvoir de prévenir efficacement, et en parfait respect de l'environnement, la formation de film primaire sur une surface d'un matériau.

### [Description détaillée]

Ainsi, l'invention concerne l'utilisation d'exopolysaccharides (EPS) comme agent de prévention de la formation de biofilms indésirables, et plus particulièrement comme agent de prévention de la formation, sur une surface, du film primaire conduisant à des biofilms indésirables.

Suivant un mode de réalisation préféré, les exopolysaccharides (EPS) de l'invention sont obtenus par fermentation de bactéries issues d'écosystèmes hydrothermaux profonds. Plus particulièrement, les EPS de l'invention sont ceux synthétisés dans des conditions contrôlées (déséquilibre nutritionnel généré par un rapport Carbone/Azote élevé dû à un milieu nutritionnel enrichi en carbohydrates) lors de la fermentation de bactéries issues d'écosystèmes hydrothermaux profonds (voir par exemple Guezennec, J. (2002). Deep-sea hydrothermal vents: A new source of innovative bacterial exopolysaccharides of biotechnological interest? Journal of Industrial Microbiology & Biotechnology 29: 204-208).

Suivant un premier mode de réalisation, ces EPS sont choisis parmi HYD 657, HYD 1644, HYD 1545, GY 785, MS 907, ST 716, HYD 721, GY 772, HYD 750, GY 768, GY 788, BI746, GY 786, GY 685, GY 686, ST 719, HYD 1574, HYD 1579, HYD 1582, HYD 1584, ST 708, ST 722, ST 342, ST 349, HYD 1625, et HYD 1666.

Suivant un second mode de réalisation, ces EPS sont choisis parmi ceux synthétisés par des bactéries du genre *Alteromonas* ou *Pseudoalteromonas,* conformément à la taxonomie en vigueur au jour de la présente invention. Si la taxonomie devait être modifiée, l'homme du métier pourrait adapter les modifications de taxonomie pour en déduire les EPS de l'invention. Avantageusement, ces bactéries sont des bactéries *Alteromonas macleodii,* et dans ce mode de réalisation, de préférence l'EPS est HYD 657. Suivant un troisième mode de réalisation, ces bactéries sont des bactéries *Alteromonas infernus,* et dans ce mode de réalisation, de préférence l'EPS est GY 785. De préférence l'EPS est HYD1545 ou HYD1644.

Le procédé selon l'invention est un procédé de protection d'une surface par prévention de la formation de biofilm bactérien indésirable sur ladite surface, dans lequel on forme un film protecteur d'exopolysaccharides sur ladite surface par mise en contact ou greffage de ladite surface avec au moins un exopolysaccharide selon l'invention.

Suivant un mode de réalisation préféré pour la mise en oeuvre du procédé de l'invention, les EPS sont en solution dans un solvant polaire, de préférence de l'eau. Suivant un mode de réalisation particulier, la concentration d'EPS dans la solution est de 0,001 à 10%, de préférence 0,01 à 1%, très préférentiellement, 0,02 à 0,5%, encore plus préférentiellement environ 0,02% en poids/volume, par rapport au volume total de la solution.

De préférence, dans le procédé de l'invention, on met en contact ladite surface avec une solution d'EPS telle que décrite ci-dessus.

Cette mise en contact ou ce greffage ont pour conséquence la formation d'un film homogène sur ladite surface.

Les conditions favorisant la formation d'un film homogène d'EPS sur les surfaces sont de préférence les suivantes :
- Température comprise entre 5 et 30°C, de préférence de 10 à 25°C.
- Solution de 0,001 à 10%, de préférence 0,01 à 1%, très préférentiellement, 0,02 à 0,5%, encore plus préférentiellement environ 0.02%, soit 200 mg/l en poids/volume, par rapport au volume total de la solution.
- durée de mise en contact de 10 secondes à 5 heures, de préférence de 1 à 120 minutes, plus préférentiellement de 3 à 60 minutes, encore plus préférentiellement de 5 à 30 minutes.

Suivant un premier mode de réalisation particulier, la mise en contact est effectuée en milieu d'eau de mer circulante.

Suivant un second mode de réalisation particulier, la mise en contact ou le greffage est réalisé préalablement à l'exposition de la surface aux conditions de formation de biofilm indésirable, par exemple mais non exclusivement, préalablement à une immersion en milieu d'eau de mer. De préférence, le greffage est effectué sur des petites surfaces, du type notamment capteurs. Le greffage pourrait permettre une meilleure tenue des EPS à la surface qu'une simple mise en contact, et assurer ainsi une protection prolongée de la surface greffée. Le greffage peut être mis en oeuvre par toute méthode connue de l'homme du métier, notamment du type de celle décrite dans WO 2008078052.

Selon l'invention, le procédé peut comprendre des moyens de suivi, notamment par des méthodes physico-chimiques, du pouvoir filmant des EPS, de leur stabilité dans le temps de manière à en optimiser l'utilisation et éviter tout risque d'hétérogénéité de surface propre à encourager des risques, notamment pour les surfaces métalliques (métaux et alliages), des risques de corrosion.

Suivant un mode de réalisation particulier, le procédé selon l'invention comprend une étape de suivi de la formation du film d'exopolysaccharides résultant de la mise en contact ou du greffage de ladite surface avec au moins un exopolysaccharide selon l'invention, par tout moyen physico-chimique adapté. En particulier, le suivi de la formation du film d'EPS sur des surfaces métalliques (métaux et alliages) peut être mesuré par des mesures électrochimiques notamment, mais non exclusivement, par la mesure du potentiel électrochimique des alliages ou métaux de la surface, ledit potentiel électrochimique et la variation de ce potentiel étant mesurés par rapport à une électrode de référence.

En effet, lors de la mise en contact des EPS avec la surface et pendant la formation du biofilm d'EPS, le potentiel électrochimique des alliages ou métaux de la surface varie. Ce potentiel électrochimique devient stable lorsque le film est homogène. Ainsi, suivant un mode de réalisation particulier, lorsque la surface est métallique, on mesure de la variation de potentiel électrochimique du métal après la première mise en contact avec les exopolysaccharides, et la mise en contact de la surface métallique avec les EPS selon le procédé de l'invention (mise en contact avec les EPS en solution, ou greffage) est poursuivie jusqu'à ce que le potentiel électrochimique de la surface se stabilise.

Suivant un mode de réalisation particulier de l'invention, on poursuit les mesures, et lorsque le potentiel électrochimique de la surface se déstabilise, on reprend la mise en contact avec les EPS jusqu'à stabilisation, à nouveau, du potentiel électrochimique. En effet, l'altération du film protecteur peut induire une variation de ce potentiel électrochimique traduisant un risque de colonisation bactérienne et par voie de conséquence une obligation de refilmer ces mêmes surfaces par remise en contact avec les EPS. Ainsi, suivant un mode de réalisation, le procédé selon l'invention comprend en outre une étape de suivi de l'état du film d'exopolysaccharide, permettant de déclencher, si nécessaire, c'est-à-dire si le film n'est pas homogène ou se dégrade, la remise en contact de la surface avec des EPS. Lorsque la surface est métallique, la déstabilisation du film peut être mesurée et suivie par la variation du potentiel électrochimique de la surface.

L'invention a donc également pour objet un procédé de contrôle de la présence d'un film protecteur sur une surface métallique, dans lequel on mesure le potentiel électrochimique de ladite surface. Suivant un mode de réalisation préféré, une variation d'au moins -10% du potentiel électrochimique d'une surface métallique sur une période de temps donnée (1-30 minutes) induit la remise en contact de la surface avec des EPS. Suivant un mode de réalisation préféré de l'invention, l'appareil de mesure du potentiel électrochimique de la surface est couplé à un appareil d'injection d'EPS, de telle manière qu'une valeur-seuil préenregistrée sur l'appareil de mesure du potentiel électrochimique déclenche la mise en contact de la surface avec une quantité donnée d'EPS. Selon un mode de réalisation préféré, la mise en contact s'effectue par injection d'une solution d'EPS à proximité de la surface à traiter.

Ainsi, selon le procédé de l'invention, la mise en contact des EPS avec la surface est de préférence renouvelable, et de préférence renouvelée, notamment sur une surface métallique lorsque le potentiel électrochimique de la surface effectue une variation d'environ 10%.

Le procédé de l'invention conduit à une réduction significative de l'adhésion bactérienne sur les surfaces étudiées donc de la formation du biofilm indésirable.

La Demanderesse a de fortes présomptions selon lesquelles le procédé de l'invention aurait un mécanisme de nature physique et que l'action des exopolysaccharides sur la prévention du film primaire ne serait pas de nature chimique : ainsi, l'invention s'inscrit dans une démarche de respect de l'environnement, et évite tout impact sur la flore bactérienne.

Selon la présente invention, le film d'EPS déposé par le procédé de l'invention modifie les caractéristiques physiques de la surface. Ainsi, le procédé selon l'invention est également un procédé de modification des caractéristiques d'adhésion d'un biofilm bactérien indésirable sur une surface, par modification des caractéristiques physique de ladite surface du fait du dépôt d'un film d'exopolysaccharides. L'invention a donc pour objet un procédé de modification des caractéristiques physique d'une surface de telle manière que l'adhésion d'un biofilm bactérien indésirable sur ladite surface se trouve limitée, lesdites caractéristiques physique de la surface susceptibles d'être modifiées pouvant être : le potentiel zeta ou le potentiel électrochimique ; l'angle de contact ; l'hydrophilie ; et les caractéristiques acide-base de Lewis.

La présente invention est particulièrement avantageuse en ce que les EPS respectent parfaitement l'environnement, n'ont aucun effet antimicrobien et ne sont pas biocides. Il est à noter que la présente invention ne constitue pas un de nettoyer une surface, ni un moyen de dissoudre ou de lutter contre un biofilm bactérien indésirable déjà installé.

### [Définitions]

Par **EPS**, on entend les exopolysaccharides synthétisés dans des conditions contrôlées (déséquilibre nutritionnel généré par un rapport Carbone/Azote élevé dû à un milieu nutritionnel enrichi en carbohydrates) lors de la fermentation de bactéries issues d'écosystèmes hydrothermaux profonds, en particulier mais non exclusivement, les EPS suivants :

| **Référence** **EPS** | **Origine** | **Oses** **neutres** | **Oses** **acides** | **Oses** **amines** | **Sulfates** | **Protéines** |
|---|---|---|---|---|---|---|
| **HYD 657** | Hydrothermale profond | 58 | 30 | 0 | 5 | 2 |
| **HYD 1644** | id | 38 | 32 | 0 | 10 | 5 |
| **HYD 1545** | id | 49 | 34 | 0 | 11 | 1 |
| **GY 785** | id | 51 | 37 | 0 | 6 | 4 |
| **MS 907** | id | 50 | 37 | 0 | 0 | 0 |
| **ST 716** | id | 46 | 41 | 2 | 5 | 4 |
| **HYD 721** | id | 57 | 11 | 0 | 8 | 3 |
| **GY 772** | id | 43 | 50 | 2 | 0 | 3 |
| **HYD 750** | id | 44 | 16 | 2 | 5 | 16 |
| **GY 768** | id | 37 | 37 | 2 | 8 | 2 |
| **GY 788** | id | 30 | 28 | 3 | 8 | 5 |
| **BI746** | id | 34 | 18 | 6 | 8 | 4 |
| **GY 786** | id | 37 | 32 | 4 | 5 | 6 |
| **GY 685** | id | 61 | 8 | 1 | 11 | 2 |
| **GY 686** | id | 46 | 8 | 2 | 15 | 7 |
| **ST 719** | id | 56 | 10 | 3 | 18 | 7 |
| **HYD 1574** | id | 66 | 9 | 1 | 13 | 3 |
| **HYD 1579** | id | 52 | 8 | 4 | 13 | 3 |
| **HYD 1582** | id | 49 | 12 | 3 | 16 | 9 |
| **HYD 1584** | id | 52 | 10 | 4 | 14 | 8 |
| **ST 708** | id | 49 | 8 | 1 | 10 | 12 |
| **ST 722** | id | 49 | 8 | 3 | 13 | 8 |
| **ST 342** | id | 42 | 7 | 2 | 17 | 18 |
| **ST 349** | id | 50 | 5 | 2 | 9 | 16 |
| **HYD 1625** | id | 46 | 40 | 2 | 13 | 4 |
| **HYD 1666** | id | 48 | 36 | 1 | 10 | 6 |

Par « **solution d'EPS** », on entend une solution formée par un solvant polaire, et un EPS ou un mélange d'EPS.

Par « **surface** », on entend la superficie, ou la partie extérieure d'une masse de matériau qui peut être d'origine synthétique, typiquement un matériau polymérique ou un matériau d'origine minérale, typiquement du verre ou du béton, ou qui peut être un métal, en particulier cuivre, le titane ; les surfaces métalliques préférées sont inox 316L, le titane, l'Inconel 600, le nickel, le laiton amirauté, et le chrome.

Par « **film primaire** », on entend un film conditionnant composé de protéines ou de fragments protéiques, de glucides, de lipides, de matières minérales comme par exemple des sels minéraux, issus du milieu environnant. Ce film primaire stimule l'adhésion bactérienne.

Par « **biofilm indésirable** », on entend un film de microorganismes, généralement des bactéries, qui viennent s'accrocher au film primaire, dans une premièer étape d'adhésion réversible puis irréversible.

Par « **greffage** », on entend tout moyen de fixation des EPS selon l'invention sur une surface.

Par « **angle de contact** », on entend l'angle auquel une interface liquide rencontre une surface solide. L'angle de contact est mesuré par un goniomètre. La mesure d'angle de contact rend compte de l'aptitude d'un liquide à s'étaler sur une surface. La méthode consiste à mesurer l'angle de la tangente du profil d'une goutte déposée sur le matériau, avec la surface du matériau. Elle permet de mesurer l'énergie de surface du liquide ou du solide. La mesure de l'angle de contact permet d'accéder à l'énergie libre d'une surface. Elle permet aussi la discrimination de la nature polaire ou apolaire des interactions à l'interface liquide/solide. On peut ainsi déduire le caractère hydrophile ou hydrophobe d'une surface.

Les exemples qui suivent montrent des modes de réalisation particuliers de l'invention, qui illustrent non limitativement l'invention.

### [Description succincte de la figure]

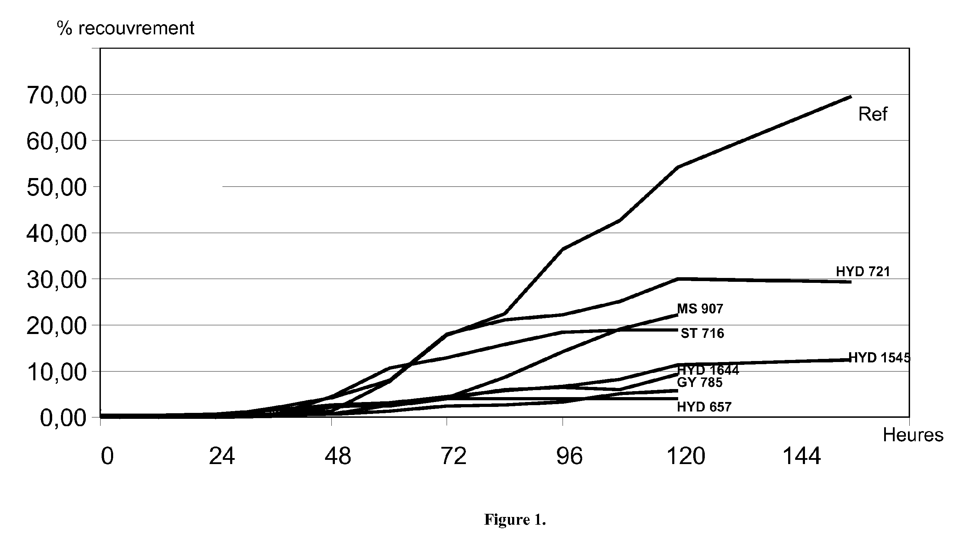

La Figure 1, qui se lit en regard de l'exemple 1 ci-dessous, est un graphe illustrant le pouvoir filmant des EPS, avec en abscisse la durée de l'expérimentation c'est-à-dire le temps d'exposition des surfaces filmées et non filmées à une eau de mer circulante, et en ordonnée le taux de recouvrement de la surface par les EPS.

### [Exemples]

### Exemple 1 - Efficacité des EPS pour limiter la contamination par biofilm bactérien indésirable

De nombreux EPS ont été testés. Sont reportés sur la figure 1 les résultats obtenus avec les EPS suivant : HYD 721, MS 907, ST 716, HYD 1545, HYD 1644,GY 785 et HYD 657.

La méthode, générale, est expliquée en regard des 4 EPS suivants :
HYD 657
GY 785
HYD 1545
HYD 1644

Ces EPS sont connus de l'art antérieur, et décrits notamment dans les publications suivantes :
- (HYD 657) : Cambon-Bonavita M.A., G. Raguénès, J. Jean, P. Vincent and J. Guézennec. (2002). A novel polymer produced by a bacterium isolated from a deep-sea hydrothermal vent polychaete annelid. Journal of Applied Microbiology, 93, 310-315,
- (GY 785) : Raguénès G, Peres A, Ruimy R, Pignet P, R Christen R, Loaec M, Rougeaux H, Barbier G and Guezennec, J. (1997). Alteromonas infernus sp.nov, a new polysaccharide producing bacterium isolated from a deep-sea hydrothermal vent. J. Appl. Bacteriol. 82: 422-430,
- (HYD 1545) : Vincent, P., Pignet, P., Talmont F, Bozzi, L., Fournet, B., Milas, M., Guezennec, J., Rinaudo M and Prieur, D. (1994). Production and characterization of an exopolysaccharide excreted by a deep-sea hydrothermal vent bacterium isolated from the polychaete Alvinella pompejana. Appl. Environ. Microbiol 60(11) : 4134-4141,
- (HYD 1644) : Dubreucq G, Domon B, Fournet B (1996) Structure determination of a novel uronic acid residue isolated from the exopolysaccharide produced by a bacterium originating from deep-sea hydrothermal vents. Carbohydr Res 290:175-181,
- Guezennec, J. (2002). Deep-sea hydrothermal vents: A new source of innovative bacterial exopolysaccharides of biotechnological interest? Journal of Industrial Microbiology & Biotechnology 29: 204-208.

### Expérimentations :

Des échantillons d'acier inoxydable 316L ont été utilisés pour les études portant sur l'influence d'un prétraitement des surfaces par des biopolymères issus de fermentation bactérienne. Les échantillons d'acier ont été pré-conditionnés par immersion dans une eau osmosée additionnée de protéines et/ou d'exopolysaccharides bactériens résultant de procédés biotechnologiques de fermentation à une concentration de 200 mg/litre (soit 0,02% poids/volume). Après deux heures de contact à une température constante de 20°C, les différents échantillons ont été rincés avec 200 ml d'eau physiologique puis séchées sous hotte à flux laminaire avant expérimentation. Des échantillons non pré-conditionnés ont été utilisés comme références.

Les essais d'adhésion en régime dynamique ont été réalisés en utilisant une eau de mer circulante non renouvelée. Le suivi de la colonisation bactérienne des échantillons non conditionnés et conditionnés par différents exopolysaccharides a été réalisé via un microscope électronique équipé d'une caméra relié à un ordinateur et en utilisant des cellules d'adhésion en dynamique.

Les pré-conditionnements des surfaces par quelques exopolysaccharides ont conduit à des réductions sensibles du pourcentage de recouvrement des supports (acier inoxydable 316L) testés. Après 120 heures d'expérimentation et sans renouvellement du conditionnement par adjonction complémentaire d'exopolymères dans le dispositif expérimental, les taux de contamination (de recouvrement par les bactéries) sont restés compris entre 5 et 10%.

Ainsi, ces mesures réalisées en eau de mer naturelle circulante ont démontré des taux de recouvrement de surface (inox 316L et verre) par des bactéries marines, inférieurs à 10% après 6 jours d'exposition sans renouvellement du biofilm, comparativement à une valeur témoin de 70 % en l'absence d'un film de polysaccharide.

### Exemple 2 : test démontrant l'absence d'activité antimicrobienne du film d'EPS. Principe :

Une culture bactérienne diluée est mise en contact dans des micropuits, avec une solution d'EPS à des concentrations connues. Le résultat est obtenu par mesure de la densité optique (DO) dans les puits après 18 h de pousse à 30°C. La concentration minimale inhibitrice (CMI) est la concentration la plus basse à laquelle l'EPS inhibe la croissance des bactéries. La concentration minimale bactéricide (CMB) est la concentration la plus basse à laquelle l'EPS tue les bactéries.

### Méthode :

Les tests ont été réalisés sur 3 bactéries :
- *Escherichia coli* SBS 363 (bacille Gram négatif)
- *Micrococcus luteus* CIP 53.45 (coque Gram positif)
- *Pseudomonas sp (souche marine)*

Un premier criblage a été réalisé sur tous les EPS à une concentration élevée (100 ou 500 µg/mL) pour repérer les EPS potentiellement actifs. Un second test a été réalisé avec une gamme de dilution des EPS actifs pour repérer la CMI. Le contenu des puits montrant une inhibition a été étalé sur milieu gélosé pour repérer la CMB.

### Résultats: Aucun EPS ne s'est révélé actif.

**Tableau récapitulatif des résultats**

| | | Activité antibactérienne (CMI µg/mL) | | |
|---|---|---|---|---|
| **EPS** | Concentrations testées | *E. coli* SBS 363 | *Pseudomonas sp.* | *M. luteus* CIP 5345 |
| **GY 785** | 100 µg/mL | > 100 | > 100 | > 100 |
| **HYD 1545** | 100 µg/mL | > 100 | > 100 | > 100 |
| **HYD 1644** | 100 µg/mL à 1 ng/ml | > 100 | > 100 | > 100 |
| **HYD 657** | 500 et 100 µg/mL | > 500 | > 500 | > 500 |

### Exemple 3 : second test démontrant que le film d'EPS n'est pas biocide

### Principe :

Une culture bactérienne diluée est mise en contact dans des micropuits, avec une solution d'EPS à des concentrations connues. Le résultat est obtenu par mesure de la densité optique (DO) dans les puits après 18 h de pousse à 30°C. La concentration minimale inhibitrice (CMI) est la concentration la plus basse à laquelle l'EPS inhibe la croissance des bactéries.La concentration minimale bactéricide (CMB) est la concentration la plus basse à laquelle l'EPS tue les bactéries.

### Méthode :

Les tests ont été réalisés sur 4 bactéries et 1 levure:
   - *Escherichia coli* ATCC 8739 (bacille Gram négatif)
   - *Bacillus subtilis* ATCC 6633 (bacille Gram positif)
   - *Pseudomonas aeruginosa* ATCC 9027 (bacille Gram négatif)
   - *Staphylococcus aureus* ATCC 6538 (coque Gram positif)
   - *Candida albicans* ATCC 10231 (levure)

Chaque EPS a été mis en solution dans de l'eau stérile à 1 mg/mL puis dilué à 0,5 mg/mL et 0,25 mg/mL. Ces solutions ont été utilisées pour réaliser les tests antimicrobiens aux concentrations finales 100 µg/mL, 50 µg/mL et 25 µg/mL.

Le contenu des puits montrant une inhibition a été étalé sur milieu de culture gélosé pour déterminer la CMB.

### Résultats :

Aux concentrations testées, les souches poussent en présence de n'importe quel EPS.

| | Concentrations testées (µg/mL) | Activité antibactérienne (CMI µg/mL) | | | | |
|---|---|---|---|---|---|---|
| **EPS** | | ***Escherichia coli*** ATCC 8739 | ***Bacillus subtilis*** ATCC 6633 | ***Pseudomonas aeruginosa*** ATCC 9027 | ***Staphylococcus aureus*** ATCC 6538 | ***Candida albicans*** ATCC 10231 |
| **GY 785** | 100-50-25 | > 100 | > 100 | > 100 | > 100 | > 100 |
| **HYD 1545** | 100-50-25 | > 100 | > 100 | > 100 | > 100 | > 100 |
| **HYD 1644** | 100-50-25 | > 100 | > 100 | > 100 | > 100 | > 100 |
| **HYD 657** | 100-50-25 | > 100 | > 100 | > 100 | > 100 | > 100 |

## Revendications

1. Exopolysaccharides en tant qu'agent de prévention de la formation, sur une surface, du film primaire conduisant à des biofilms indésirables.

2. Exopolysaccharides selon la revendication **1, caractérisés en ce qu'**ils sont obtenus par fermentation de bactéries issues d'écosystèmes hydrothermaux profonds.

3. Exopolysaccharides en tant qu'agent de prévention de la formation de biofilms indésirables sur une surface, lesdits exopolysaccharides étant obtenus par fermentation de bactéries issues d'écosystèmes hydrothermaux profonds du genre *Alteromonas* ou *Pseudoalteromonas.*

4. Exopolysaccharides selon l'une quelconque des revendications **1** à **3, caractérisés en ce que** lesdits exopolysaccharides sont obtenus par fermentation de bactéries *Alteromonas macleodii* ou *Alteromonas infernus.*

5. Exopolysaccharides selon l'une quelconque des revendications **1** à **4, caractérisés en ce que** lesdits exopolysaccharides sont choisis parmi HYD 657, HYD 1644, HYD 1545, GY 785, MS 907, ST 716, HYD 721, GY 772, HYD 750, GY 768, GY 788, BI746, GY 786, GY 685, GY 686, ST 719, HYD 1574, HYD 1579, HYD 1582, HYD 1584, ST 708, ST 722, ST 342, ST 349, HYD 1625, et HYD 1666.

6. Procédé de protection d'une surface par prévention de la formation du film primaire conduisant à des biofilms indésirables, dans lequel on forme un film protecteur d'exopolysaccharides sur ladite surface par mise en contact ou greffage de ladite surface avec au moins un exopolysaccharide selon l'une quelconque des revendications **1** à **5.**

7. Procédé selon la revendication **6, caractérisé en ce qu'**il comprend en outre une étape de suivi de la formation ou de l'état du film d'exopolysaccharides résultant de la mise en contact ou du greffage de ladite surface avec au moins un exopolysaccharide selon l'une quelconque des revendications **1** à **5,** par tout moyen physico-chimique adapté.

8. Procédé selon la revendication **7, caractérisé en ce que** ladite surface est métallique, **en ce que** ledit moyen physicochimique est la mesure de la variation de potentiel électrochimique de ladite surface.

9. Procédé selon l'une des revendications **6** à **8, caractérisé en ce que** la mise en contact est effectuée ponctuellement ou à intervalles réguliers, de préférence par injection d'une solution d'EPS de concentration de 0,001 à 10%, de préférence 0,01 à 1 % en poids par rapport au volume total de la solution, à proximité d'une surface.

10. Procédé de modification des caractéristiques physiques d'une surface de telle manière que l'adhésion d'un biofilm bactérien indésirable sur ladite surface se trouve limitée, dans lequel on met en contact ou l'on greffe ladite surface avec un exopolysaccharide selon l'une quelconque des revendications **1** à **5.**
